# EUROPEAN PATENT APPLICATION

(11) **EP 4 822 844 A1**
(43) Date of publication of application: **14.10.2026**
(21) Application number: 25226022.9
(22) Date of filing: 19.12.2025
(51) Int. Cl.: H01M 50/209

(54) **BATTERY PACK**

(30) Priority: 09.04.2025 KR 20250045915
(71) Applicant: SAMSUNG SDI CO., LTD., Yongin-si, Gyeonggi-do 17084 (KR)
(72) Inventor: AHN, Byung Kook, 16678 Suwon-si (KR); KIM, Sang Yoon, 16678 Suwon-si (KR)
(74) Representative: Marks & Clerk LLP

(57) **Abstract**

A battery pack includes a housing, a plurality of battery cells accommodated in the housing and each including a vent, a cover coupled to the housing and spaced apart from the battery cells, and a heat-resistant layer on the cover and facing the battery cells.

## Description

### BACKGROUND

### 1. Field

Aspects of embodiments of the present disclosure relate to a battery pack.

### 2. Description of the Related Art

Secondary batteries are batteries that can be charged and discharged, unlike primary batteries that cannot be recharged. Low-capacity secondary batteries may be used in portable small electronic devices, such as smartphones, feature phones, laptop computers, digital cameras, and camcorders, while high-capacity secondary batteries are widely used as power sources for driving motors in hybrid vehicles, electric vehicles, and the like, and batteries for power storage, and the like. These secondary batteries include an electrode assembly composed of a positive electrode and a negative electrode, a case which accommodates the electrode assembly, a cell terminal connected to the electrode assembly, and the like.

These secondary batteries may be used as battery packs formed of a plurality of unit battery cells connected in series and/or parallel to provide high energy density. The battery packs may be formed by connecting cell terminals of a plurality of unit batteries to each other to match a desired amount of power, and/or to implement, for example, high-power secondary batteries for electric vehicles.

The above-described information disclosed in the background technology of this invention is provided to improve understanding of the background of the present invention and may include information that does not constitute related art.

### SUMMARY

According to an aspect of embodiments of the present invention, a battery pack that is capable of preventing (preventing or substantially preventing) heat transfer to neighboring battery cells if a battery cell experiences thermal runaway is provided.

However, aspects and technical problems to be solved by the present invention are not limited to the aspects and problems to be solved described above, and other aspects and problems to be solved not mentioned can be clearly understood by those skilled in the art from the description of the invention described below.

According to one or more embodiments of the present invention, a battery pack includes: a housing, a plurality of battery cells accommodated in the housing and each having a vent, a cover coupled to the housing and spaced apart from the battery cells, and a heat-resistant layer on the cover and facing the battery cells.

The battery pack may further include an insulating member between the battery cells and the cover.

A thickness of the heat-resistant layer may be thinner than a thickness of the insulating member.

The insulating member may be spaced apart from the heat-resistant layer.

The insulating member may be on the cover and spaced apart from the battery cells.

The insulating member may include a first insulating member, and a second insulating member spaced apart from the first insulating member.

The heat-resistant layer may be between the first insulating member and the second insulating member.

The vent may be between the first insulating member and the second insulating member.

The heat-resistant layer may face the vent and be spaced apart from the vent.

The battery pack may further include a guide between the cover and the vent, communicating with the vent, and having a flow path through which substances discharged through the vent flow.

The guide may include a first plate including an inlet to allow an inflow of the discharged substances into the flow path and spaced apart from the cover, a second plate extending from the first plate and connected to the cover, and a third plate extending from the first plate, connected to the cover, and spaced apart from the second plate.

At least one of the second plate and the third plate may obliquely extend from the first plate at a certain angle (e.g., a set angle).

The guide may further include a plurality of partition walls spaced apart along the flow path and configured to allow a part of the discharged substances to flow.

The plurality of partition walls may include a first partition wall, and a second partition wall spaced apart from the first partition wall.

The vent may be between the first partition wall and the second partition wall.

The first partition wall and the second partition wall may be arranged alternately along the flow path.

The first partition wall may be connected to the first plate and the second plate and may not be in contact with the third plate, and the second partition wall may be connected to the first plate and the third plate and may not be in contact with the second plate.

The guide unit may further include a blocking plate protruding from the first plate and located at an edge of the inlet to block the inflow of the discharged substances into the vent.

A separation distance between each of the battery cells and the cover may be 8 mm to 30 mm.

A thickness of the heat-resistant layer may be 20 µm to 30 µm.

At least some of the above and other features of the invention are set out in the claims.

### BRIEF DESCRIPTION OF THE DRAWINGS

The above and other aspects, objects, features, and advantages of the present invention will become more apparent to those of ordinary skill in the art by describing some embodiments thereof in further detail with reference to the accompanying drawings, in which:
FIG. 1 is an exploded perspective view of a battery pack according to an embodiment of the present invention when viewed from above;
FIG. 2 is an exploded perspective view of the battery pack of FIG. 1 when viewed from below;
FIG. 3 is a cross-sectional view schematically showing the battery pack of FIG. 1;
FIG. 4 is a perspective view schematically showing a battery cell according to an embodiment of the present invention;
FIG. 5 is a cross-sectional view schematically showing the battery cell of FIG. 4;
FIG. 6 is an exploded perspective view of a battery pack according to another embodiment of the present invention when viewed from above;
FIG. 7 is an exploded perspective view of the battery pack of FIG. 6 when viewed from below;
FIG. 8 is a cross-sectional view schematically showing the battery pack of FIG. 6;
FIG. 9 is an exploded perspective view schematically showing a battery pack according to another embodiment of the present invention;
FIG. 10 is a cross-sectional view schematically showing the battery pack of FIG. 9;
FIG. 11 is an exploded perspective view schematically showing a battery pack according to another embodiment of the present invention;
FIG. 12 is a cross-sectional view schematically showing the battery pack of FIG. 11;
FIG. 13 is an exploded perspective view schematically showing a battery pack according to another embodiment of the present invention; and
FIG. 14 is a cross-sectional view schematically showing the battery pack of FIG. 13.

### DETAILED DESCRIPTION

Herein, some embodiments of the present invention will be described in further detail with reference to the attached drawings. Terms or words used in this specification and claims are not to be interpreted as limited to ordinary or dictionary meanings and are to be interpreted as having meanings and concepts consistent with the technical idea of this invention based on the principle that the inventor can properly define the concept of the term in order to describe his or her invention in the best way. Accordingly, it is to be understood that the embodiments described herein, and the configurations illustrated in the drawings are only some example embodiments of the invention and do not necessarily represent all of the technical ideas of the invention, and that there may be various equivalents and modifications thereof at the time of filing.

Further, when used herein, the terms "comprise" or "include" and/or "comprising" or "including" specify the presence of the mentioned shapes, numbers, steps, operations, members, elements, and/or groups thereof and are not intended to exclude the presence or addition of one or more other shapes, numbers, operations, members, elements, and/or groups thereof.

In addition, to facilitate understanding of the invention, the attached drawings may not be drawn to actual scale, and the dimensions of some components may be exaggerated. In addition, the same reference numbers may be assigned to the same components in different embodiments.

The statement that two objects for comparison are "equal" or "the same" means the same or substantially the same. Therefore, "equal," "the same," or substantially the same may include deviations that are considered low in the art, for example, deviations of less than 5%. Additionally, uniformity of a parameter over a given region may imply uniformity from an average perspective.

Although "first," "second," and the like may be used to describe various components, the components are not limited by these terms. These terms are used to distinguish one component from another, and, unless otherwise specifically stated, it is to be understood that a first component may also be a second component.

Throughout the specification, unless otherwise specifically stated, each element may be singular or plural.

When an arbitrary configuration is placed "on (or under)" a component or "above (or below)" a component, it can mean not only that the arbitrary configuration is placed in contact with the top (or bottom) of the component, but also that other configurations can be interposed between the component and the arbitrary configuration placed on (or under) the component.

In addition, when a component is described as being "on," "connected to," or "coupled to" another component, the above components may be directly connected or coupled to each other, but it is to be understood that one or more other components may be "interposed" between each component, or each component may be "connected," "coupled," or "linked" through another component.

As used herein, the term "and/or" includes any and all combinations of one or more of the associated listed items. Further, the use of "may" when describing embodiments of the present disclosure relates to "one or more embodiments of the present disclosure." Equations such as "one or more" and "one or more" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above." Thus, the term "below" may encompass both an orientation of above and below.

The terms used in the present specification are intended to describe embodiments of the present disclosure, and are not intended to limit the present disclosure.

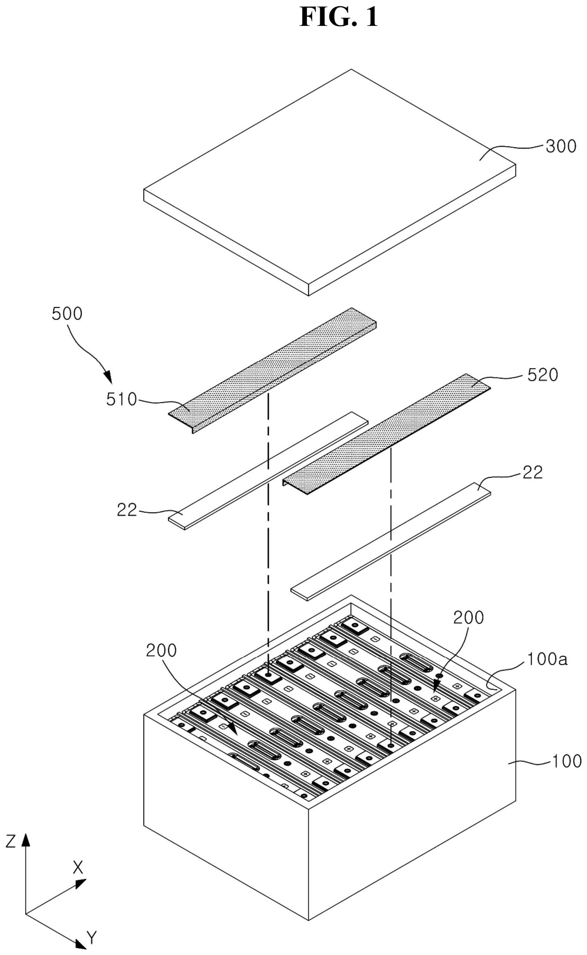

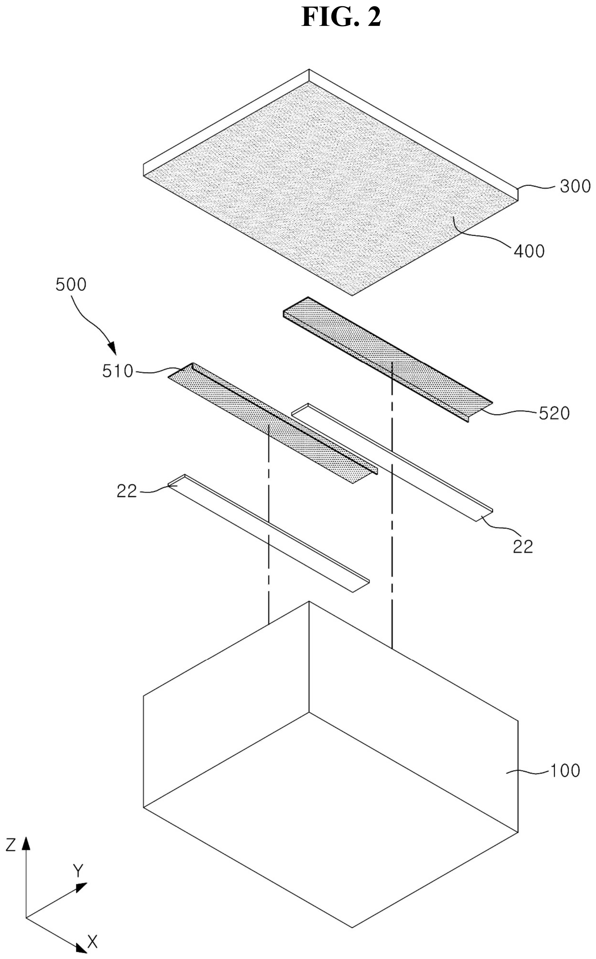

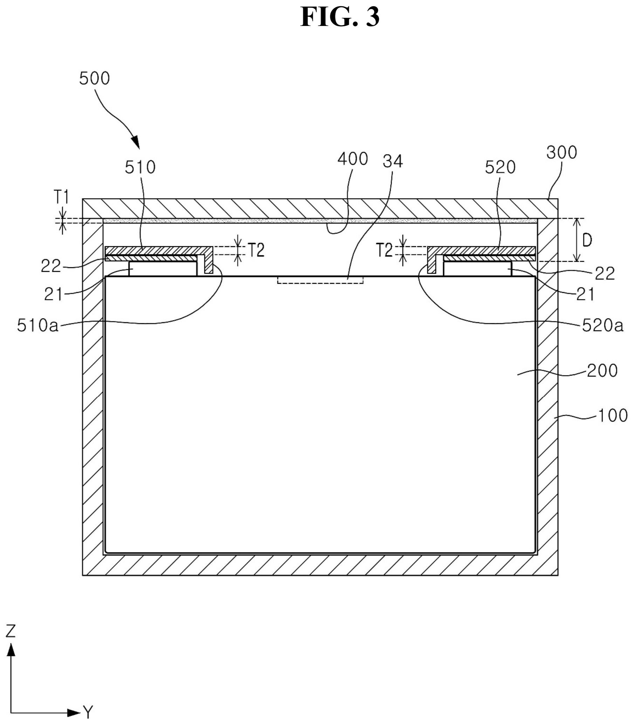

FIG. 1 is an exploded perspective view of a battery pack according to an embodiment of the present invention when viewed from above; FIG. 2 is an exploded perspective view of the battery pack of FIG. 1 when viewed from below; and FIG. 3 is a cross-sectional view schematically showing the battery pack of FIG. 1.

Referring to FIGS. 1 to 3, the battery pack according to an embodiment of the present invention may include a housing 100, a battery cell 200, a cover 300, a heat-resistant layer 400, and an insulating member 500.

The housing 100 may form a general exterior of the battery pack and protect the battery cell 200 from external impacts and foreign substances. The housing 100 may provide a space for accommodating the battery cell 200 therein. In an embodiment, the housing 100 may be manufactured by including a metal material, such as steel.

The housing 100 may be formed to have a shape of a box in which the inside is hollow and a side (an upper surface based on FIG. 1) is open. For example, the open side of the housing 100 may be disposed to face upward (in a Z-axis direction based on FIG. 1) based on FIG. 1.

However, a cross-sectional shape of the housing 100 is not limited to the quadrangular shape shown in FIG. 1, and may have any of various shapes, such as any of a polygon, a circle, and an oval.

The battery cell 200 may function as a unit structure that stores and supplies power in the battery pack. The battery cell 200 may be disposed inside the housing 100.

The battery cell 200 may be provided as a plurality of battery cells 200. The plurality of battery cells 200 may be arranged in multiple rows inside the housing 100. For example, the plurality of battery cells 200 may be arranged in a plurality of rows in a longitudinal direction of the housing 100 (X-axis direction based on FIG. 1).

However, an arrangement form of the plurality of battery cells 200 is not limited thereto, and the battery cells 200 may be arranged in a plurality of rows in a width direction of the housing 100 (Y-axis direction based on FIG. 1), or may be arranged in a plurality of rows in the longitudinal direction and width direction of the housing 100.

A first direction according to the present embodiment may mean the X-axis direction, that is, the longitudinal direction of the housing 100 based on FIGS. 1 and 2, a second direction may mean the Y-axis direction, that is, the width direction of the housing 100 based on FIGS. 1 and 2, and a third direction may mean the Z-axis direction, that is, a height direction of the housing 100 based on FIGS. 1 and 2.

Herein, the battery cell 200 is described as a prismatic lithium ion secondary battery as an example. However, the present invention is not limited thereto, and the battery cell 200 may be a lithium polymer battery or a cylindrical battery, for example.

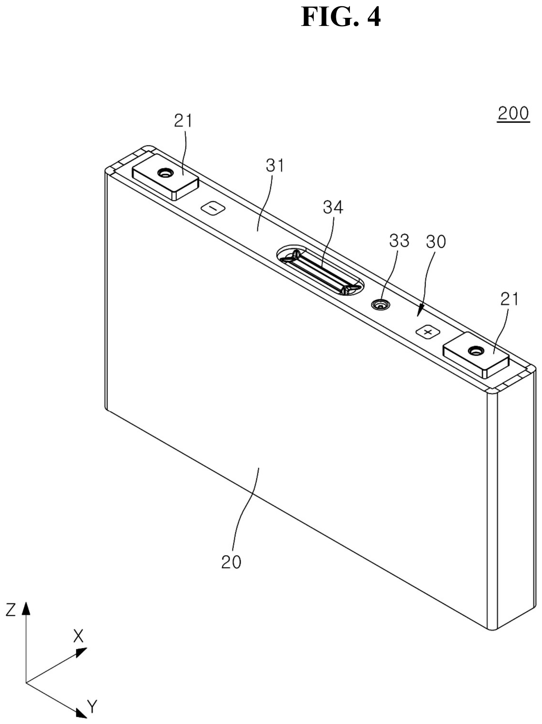

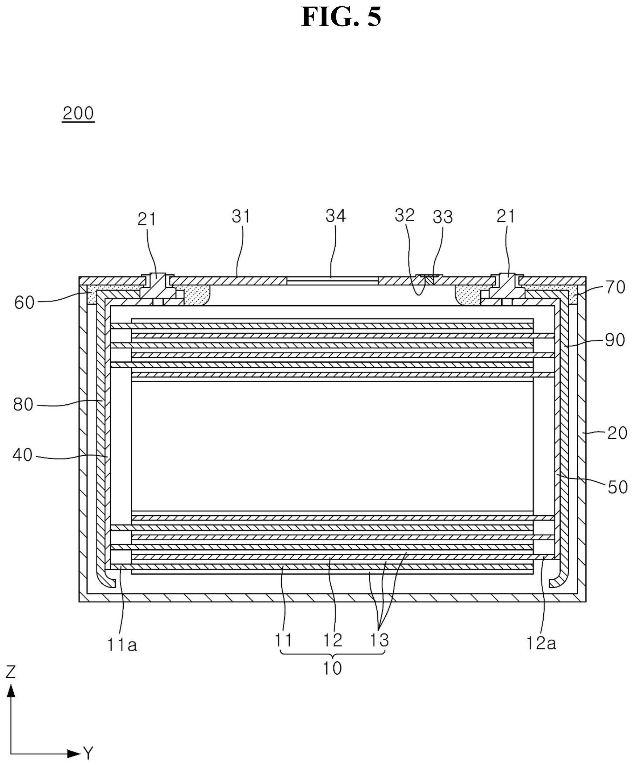

FIG. 4 is a perspective view schematically showing a battery cell according to an embodiment of the present invention; and FIG. 5 is a cross-sectional view schematically showing the battery cell of FIG. 4.

Referring to FIGS. 1 to 5, the battery cell 200 according to an embodiment of the present invention may include at least one electrode assembly 10 formed by arranging a separator 13, which is an insulator, between a positive electrode 11 and a negative electrode 12 and winding the same, a case 20 in which the electrode assembly 10 is accommodated, and a cap assembly 30 coupled to an opening of the case 20.

The positive electrode 11 and the negative electrode 12 may include a coated portion, which is a region where an active material is applied to a current collector formed of a thin metal foil, and uncoated portions 11a and 12a, which are regions where the active material is not coated.

The positive electrode 11 and the negative electrode 12 may be wound with the separator 13, which is an insulator, disposed therebetween. However, the present invention is not limited thereto, and, in an embodiment, the electrode assembly 10 may be formed in a structure in which a plurality of sheets of positive electrodes 11 and negative electrodes 12 are alternately laminated with the separator 13 disposed therebetween.

The case 20 may form an exterior (e.g., an overall exterior) of the battery cell 200 and may be formed of a conductive metal, such as aluminum, an aluminum alloy, or nickel-plated steel. Additionally, the case 20 may provide a space in which the electrode assembly 10 is accommodated.

The cap assembly 30 may include a cap plate 31 covering the opening of the case 20, and the case 20 and the cap plate 31 may be made of a conductive material. In an embodiment, a cell terminal 21 electrically connected to the positive electrode 11 or the negative electrode 12 may be installed to protrude outward by passing through the cap plate 31.

In an embodiment, an outer circumferential surface of an upper pillar of the cell terminal 21 protruding outward from the cap plate 31 may be screw-processed and fixed to the cap plate 31 with a nut. However, the present invention is not limited thereto, and, in an embodiment, the cell terminal 21 may be formed to have a rivet structure and may be riveted or may be welded to the cap plate 31.

In addition, the cap plate 31 may be formed of a thin plate and may be coupled to the opening of the case 20, and in the cap plate 31, an electrolyte inlet 32 in which a sealing plug 33 may be installed may be formed, and a vent 34 having a notch may be arranged or installed.

The vent 34 may be opened and closed in response to changes in internal pressure of the case 20. That is, the vent 34 may maintain a closed state during normal operation of the electrode assembly 10 to seal the case 20.

The vent 34 may be opened as the internal pressure of the case 20 rises above a certain level (e.g., a set level) due to overcharging, a fire, or the like, and may discharge substances, such as high-temperature gas, flames, and debris, from the inside of the case 20 to the outside of the case 20.

The cell terminal 21 may be electrically connected to each of current collectors including first and second current collectors 40 and 50 (herein referred to as positive and negative electrode current collectors) welded to a positive electrode uncoated portion 11a or a negative electrode uncoated portion 12a.

For example, the cell terminals 21 may be joined to the positive and negative electrode current collectors 40 and 50 by welding. However, the present invention is not limited thereto, and, for example, the cell terminals 21 and the positive and negative electrode current collectors 40 and 50 may be formed integrally.

In an embodiment, an insulating member may be installed between the electrode assembly 10 and the cap plate 31. In an embodiment, the insulating member may include first and second lower insulating members 60 and 70, and each of the first and second lower insulating members 60 and 70 may be installed between the electrode assembly 10 and the cap plate 31.

Additionally, according to an embodiment, an end of a separating member that may be installed to face a side surface of the electrode assembly 10 may be installed between the insulating member and the cell terminal 21. The separating member may include first and second separating members 80 and 90.

Accordingly, ends of the first and second separating members 80 and 90 that may be installed to face a side surface of the electrode assembly 10 may be installed between the first and second lower insulating members 60 and 70 and the cell terminal 21.

As a result, the cell terminal 21 welded to each of the positive and negative electrode current collectors 40 and 50 may be coupled to an end of each of the first and second lower insulating members 60 and 70 and the first and second separating members 80 and 90.

The cell terminal 21 may be provided on an upper surface of the battery cell 200 (based on FIG. 4). The cell terminal 21 may protrude from the upper surface of the battery cell 200 in the third direction. The cell terminal 21 may protrude upward from the upper surface of the battery cell 200 in a direction in which the cover 300 is located.

However, a cross-sectional shape of the cell terminal 21 is not limited to the quadrangular shape shown in FIG. 4, and may have any of various shapes, such as any of a polygon, a circle, and an oval.

The cell terminal 21 may be provided as a pair of cell terminals 21. The pair of cell terminals 21 may be provided to have different polarities. One cell terminal 21 of the pair of cell terminals 21 may have a positive (+) polarity, and the other cell terminal 21 may have a negative (-) polarity.

In an embodiment, the pair of cell terminals 21 may be symmetrically disposed at both, or opposite, sides of the battery cell 200. The pair of cell terminals 21 may be disposed spaced apart in the second direction.

The plurality of battery cells 200 according to an embodiment may be electrically connected by a bus bar 22. The bus bar 22 may be manufactured by including an electrically conductive material, such as copper, aluminum, and nickel.

The bus bar 22 may connect neighboring battery cells 200 in series or parallel. In an embodiment, the bus bar 22 may be formed to have a flat plate shape and may be formed to have a shape extending in a direction parallel to the first direction. However, a specific shape of the bus bar 22 is not limited to that shown in FIG. 1, and may have any of various shapes that may electrically connect neighboring battery cells 200.

The bus bar 22 may be provided as a plurality of bus bars 22. For example, one bus bar 22 of a pair of bus bars 22 may electrically connect neighboring cell terminals 21 having a positive polarity, and the other bus bar 22 may electrically connect neighboring cell terminals 21 having a negative polarity.

The bus bar 22 may be disposed between the battery cell 200 and the cover 300. In further detail, the bus bar 22 may be disposed between the cell terminal 21 and the cover 300. The bus bar 22 may be fixed to the cell terminal 21 by any of various types of coupling methods, such as any of welding, bolting, and fitting, while being seated on the cell terminal 21.

The cover 300 may be coupled to the housing 100 and may cover an opening 100a provided in the housing 100. The cover 300 may seal the inside of the housing 100 by covering the opening 100a formed in the upper surface of the housing 100 (based on FIG. 1).

The cover 300 may be fixed to an upper portion of the housing 100 by any of various types of coupling methods, such as any of welding, bolting, and fitting. The cover 300 may protect the battery cell 200 from external impacts and foreign substances.

The cover 300 may be formed to have a generally flat plate shape. In an embodiment, the cover 300 may be manufactured by including a metal material, such as steel.

The cover 300 may be disposed above the plurality of battery cells 200. The cover 300 may be disposed to face the plurality of battery cells 200 in the third direction. In an embodiment, the lower surface of the cover 300 and the upper surface of the battery cell 200 may be disposed to face each other in parallel.

The cover 300 according to an embodiment may be disposed spaced apart from the plurality of battery cells 200 in the third direction. Thus, a space through which substances, such as high-temperature gas, flames, and debris discharged through the vent 34 of the battery cell 200 may flow may be formed between the plurality of battery cells 200 and the cover 300.

In an embodiment, a separation distance D between the battery cell 200 and the cover 300 in a direction parallel to the third direction may be 8 mm to 30 mm. For example, if the separation distance D between the battery cell 200 and the cover 300 is less than 8 mm, substances, such as high-temperature gas, flames, and debris, discharged through the vent 34 may stagnate in the space between the battery cell 200 and the cover 300 if the battery cell 200 experiences thermal runaway and heat may be transferred to the neighboring battery cell 200. In addition, if the separation distance D between the battery cell 200 and the cover 300 exceeds 30 mm, integration of the battery pack may be reduced, which may result in a decrease in the energy density of the battery pack.

The heat-resistant layer 400 may be provided on the cover 300. The heat-resistant layer 400 may be provided on the lower surface of the cover 300 facing the upper surface of the battery cell 200. That is, the heat-resistant layer 400 may be disposed to face the battery cell 200. In an embodiment, the heat-resistant layer 400 may be formed by applying heat-resistant paint to the lower surface of the cover 300. That is, the lower surface of the cover 300 may be coated with heat-resistant paint.

The heat-resistant layer 400 may not only increase the heat resistance of the cover 300, but also induce thermal deformation of the cover 300 when the cover 300 is exposed to high temperatures, that is, induce physical dimensional deformation due to heat, thereby securing additional space between the battery cell 200 and the cover 300. In further detail, the heat-resistant layer 400 formed on the lower surface of the cover 300 facing the upper surface of the battery cell 200 where the vent 34 is located may increase heat resistance that protects the cover 300 from high-temperature gas and flames discharged through the vent 34 if the battery cell 200 experiences thermal runaway, and decrease a phenomenon in which substances discharged through the vent 34 stagnate in the space between the battery cell 200 and the cover 300 as the space between the battery cell 200 and the cover 300 expands by inducing the deformation of the cover 300 due to the heat conduction phenomenon of the heat transferred to the cover 300. Thus, if the battery cell 200 experiences thermal runaway, heat transfer to the neighboring battery cells 200 may be prevented or substantially prevented.

In an embodiment, a thickness T1 of the heat-resistant layer 400 in a direction parallel to the third direction may be 20 µm to 30 µm. For example, if the thickness T1 of the heat-resistant layer 400 is less than 20 µm, the heat resistance of the cover 300 may not be sufficiently secured, and if the thickness T1 of the heat-resistant layer 400 exceeds 30 µm, the thermal deformation of the cover 300 may not be induced.

The insulating member 500 may be disposed between the battery cell 200 and the cover 300. The insulating member 500 may be formed to have a generally flat plate shape. The insulating member 500 according to an embodiment may be, for example, an insulation sheet, an insulation film, an insulation panel, or the like.

The insulating member 500 may be disposed spaced apart from the heat-resistant layer 400 in the third direction. In an embodiment, the thickness T1 of the heat-resistant layer 400 in a direction parallel to the third direction may be thinner than a thickness T2 of the insulating member 500 in a direction parallel to the third direction.

The insulating member 500 according to an embodiment may include a first insulating member 510 and a second insulating member 520.

The first insulating member 510 and the second insulating member 520 may be disposed spaced apart from each other in the second direction. The first insulating member 510 may be seated on one cell terminal 21 of the pair of cell terminals 21, and the second insulating member 520 may be seated on the other cell terminal 21 of the pair of cell terminals 21.

The vent 34 may be disposed between the first insulating member 510 and the second insulating member 520. That is, the first insulating member 510 and the second insulating member 520 may be disposed at both, or opposite, sides of the vent 34, respectively.

The space through which substances, such as high-temperature gas, flames, and debris, discharged through the vent 34 of the battery cell 200 may flow may be formed between the insulating member 500 and the cover 300.

In an embodiment, a first extension portion 510a may be further provided on the first insulating member 510. The first extension portion 510a may extend from an end portion of the first insulating member 510 facing the second insulating member 520 in a direction parallel to the third direction and may be disposed to face an outer surface of the cell terminal 21. Thus, it is possible to prevent or substantially prevent the substances discharged through the vent 34 from coming into contact with the cell terminal 21.

A second extension portion 520a may be further provided on the second insulating member 520. The second extension portion 520a may extend from an end portion of the second insulating member 520 facing the first insulating member 510 in a direction parallel to the third direction and may be disposed to face the outer surface of the cell terminal 21. Thus, it is possible to prevent or substantially prevent the substances discharged through the vent 34 from coming into contact with the cell terminal 21.

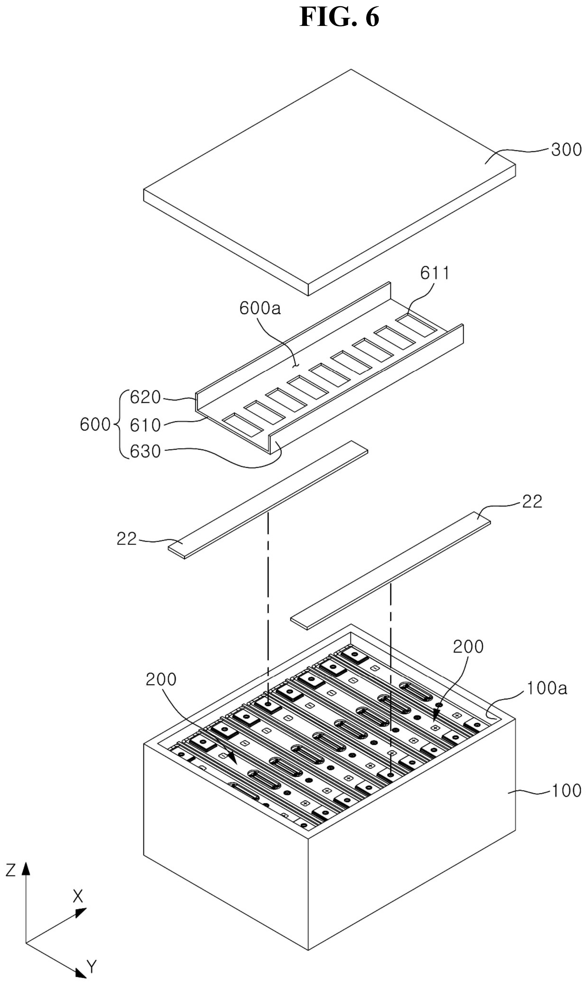

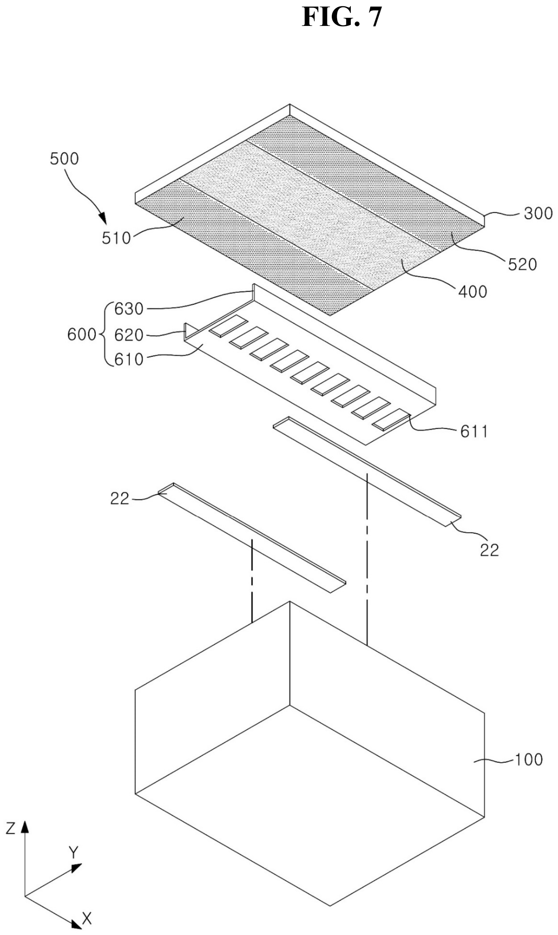

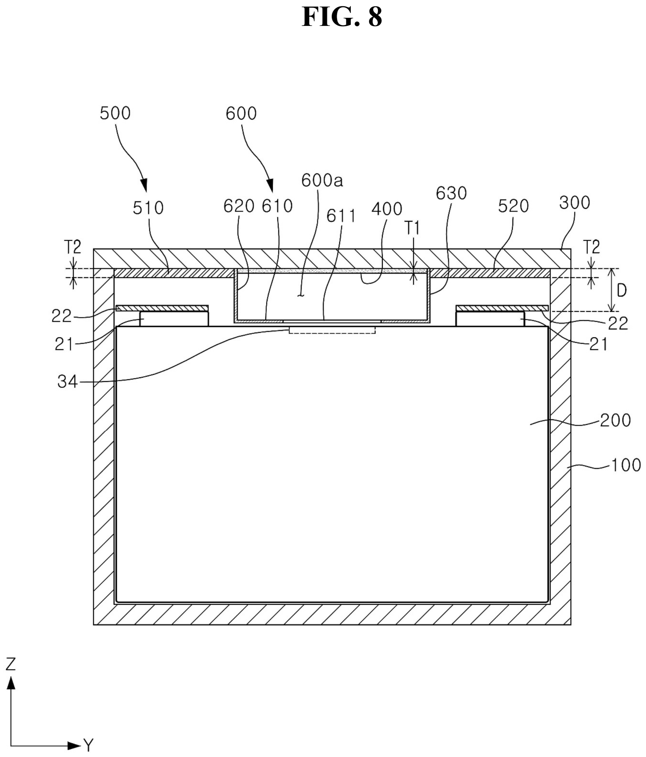

FIG. 6 is an exploded perspective view of a battery pack according to another embodiment of the present invention when viewed from above; FIG. 7 is an exploded perspective view of the battery pack of FIG. 6 when viewed from below; and FIG. 8 is a cross-sectional view schematically showing the battery pack of FIG. 6.

Referring to FIGS. 6 to 8, the battery pack according to another embodiment of the present invention may include a housing 100, a battery cell 200, a cover 300, a heat-resistant layer 400, an insulating member 500, and a guide unit 600.

In describing the battery pack according to the present embodiment of the present invention, embodiments of the heat-resistant layer 400 and the insulating member 500 and the guide unit 600 that were not described in the battery pack according to the previously described embodiment of the present invention will be described.

The description of the battery pack according to the previously described embodiment of the present invention may be applied to the remaining configuration of the battery pack according to the present embodiment of the present invention.

The heat-resistant layer 400 may be provided on the cover 300. The heat-resistant layer 400 may be provided on a lower surface of the cover 300 facing an upper surface of the battery cell 200. The heat-resistant layer 400 may be spaced apart from a vent 34 in the third direction and disposed to face the vent 34.

The insulating member 500 may be disposed between the battery cell 200 and the cover 300. The insulating member 500 may be provided on the cover 300. The insulating member 500 may be provided on the lower surface of the cover 300 facing the upper surface of the battery cell 200. The insulating member 500 may be attached to the lower surface of the cover 300.

The insulating member 500 may be disposed spaced apart from the battery cell 200 in the third direction.

The insulating member 500 according to an embodiment may include a first insulating member 510 and a second insulating member 520.

The first insulating member 510 and the second insulating member 520 may be disposed spaced apart from each other in the second direction. The heat-resistant layer 400 may be disposed between the first insulating member 510 and the second insulating member 520. That is, the first insulating member 510 and the second insulating member 520 may be disposed at both, or opposite, sides of the heat-resistant layer 400, respectively.

In an embodiment, a thickness T1 of the heat-resistant layer 400 in a direction parallel to the third direction may be thinner than a thickness T2 of each of the first insulating member 510 and the second insulating member 520 in a direction parallel to the third direction.

The first insulating member 510 may be disposed spaced apart from one cell terminal 21 of a pair of cell terminals 21 and facing the one cell terminal 21 in the third direction, and the second insulating member 520 may be disposed spaced apart from the other cell terminal 21 and facing the other cell terminal 21 of the pair of cell terminals 21 in the third direction. The vent 34 may be disposed between the first insulating member 510 and the second insulating member 520.

The guide unit 600 may be disposed between the cover 300 and the vent 34. The guide unit 600 may be formed to have a shape extending in the first direction.

The guide unit 600 may be coupled to the cover 300. The guide unit 600 may be fixed to the lower portion of the cover 300 by any of various types of coupling methods, such as any of welding, bolting, and fitting.

The guide unit 600 may communicate with the vent 34. A flow path 600a through which the substances discharged through the vent 34 flow may be provided inside the guide unit 600. The flow direction of the discharged substances flowing through the flow path 600a may be in the longitudinal direction of the guide unit 600, that is, in a direction parallel to the first direction.

The guide unit 600 according to an embodiment may include a first plate 610, a second plate 620, and a third plate 630.

The first plate 610 may be formed to have a generally flat plate shape. The first plate 610 may be seated on the battery cell 200 or spaced apart from the battery cell 200. The first plate 610 may be disposed spaced apart from the cover 300 in the third direction. The first plate 610 may be disposed to face the heat-resistant layer 400.

An inlet 611 may be provided in the first plate 610. The inlet 611 may be formed to pass through the first plate 610 in the third direction. The inlet 611 may allow the inflow of discharged substances into the flow path 600a. In further detail, the inlet 611 may be disposed to face the vent 34 such that the substances discharged through the vent 34 flow into the flow path 600a through the inlet 611.

The second plate 620 and the third plate 630 may be disposed spaced apart from each other in the second direction. The first plate 610 may be disposed between the second plate 620 and the third plate 630. That is, the second plate 620 and the third plate 630 may be disposed at both, or opposite, sides of the first plate 610, respectively.

The second plate 620 may be formed to have a generally flat plate shape. The second plate 620 may extend from the first plate 610 and may be connected to the cover 300. The second plate 620 may extend from a first side of the first plate 610 in the third direction and may be connected to the cover 300. An end portion of the second plate 620 may be fixed to the lower surface of the cover 300.

The second plate 620 may be disposed between the cell terminal 21 facing the first insulating member 510 and the first plate 610, and the end portion fixed to the cover 300 may be disposed between the first insulating member 510 and the heat-resistant layer 400.

The third plate 630 may be formed to have a generally flat plate shape. The third plate 630 may extend from the first plate 610 and may be connected to the cover 300. The third plate 630 may extend from a second side of the first plate 610 in the third direction and may be connected to the cover 300. An end portion of the third plate 630 may be fixed to the lower surface of the cover 300.

The third plate 630 may be disposed between the cell terminal 21 facing the second insulating member 520 and the first plate 610, and the end portion fixed to the cover 300 may be disposed between the heat-resistant layer 400 and the second insulating member 520.

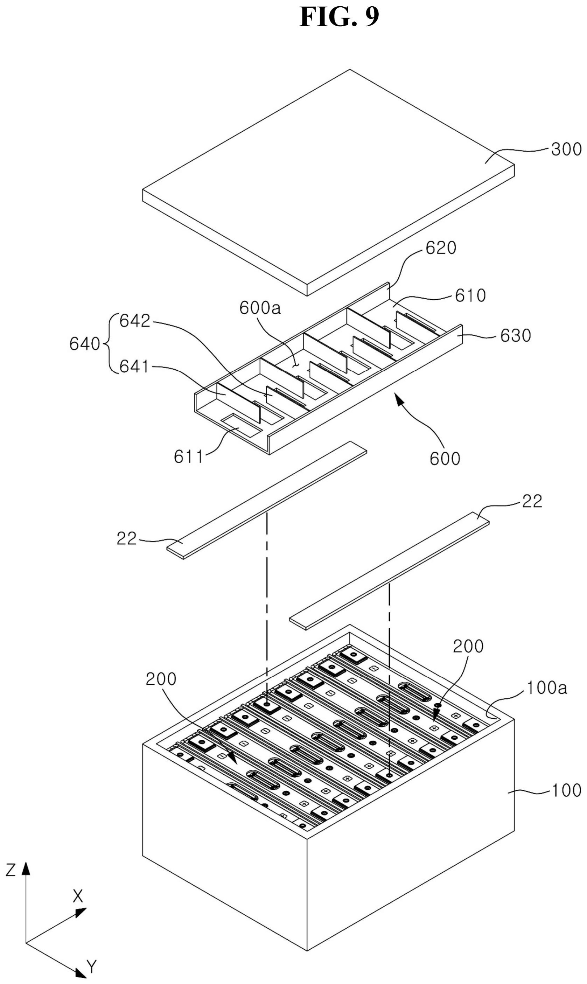

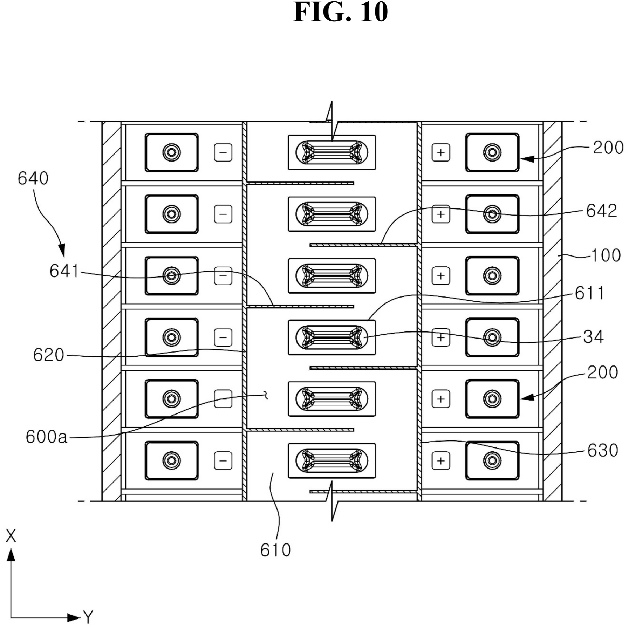

FIG. 9 is an exploded perspective view schematically showing a battery pack according to another embodiment of the present invention; and FIG. 10 is a cross-sectional view schematically showing the battery pack of FIG. 9.

Referring to FIGS. 9 and 10, the battery pack according to another embodiment of the present invention may include a housing 100, a battery cell 200, a cover 300, a heat-resistant layer 400, an insulating member 500, and a guide unit 600.

In describing the battery pack according to the present embodiment of the present invention, an embodiment of the guide unit 600 that was not described in the battery pack of FIG. 6 will be described.

For a remaining configuration of the battery pack according to the present embodiment of the present invention, the description of the battery pack of FIG. 1 or the battery pack of FIG. 6 may be applied.

The guide unit 600 according to the present embodiment may include a first plate 610, a second plate 620, a third plate 630, and a partition wall 640.

The partition wall 640 may be provided as a plurality of partition walls 640 spaced apart from each other along a flow path 600a. In an embodiment, the plurality of partition walls 640 may be disposed spaced apart from each other in the longitudinal direction of the guide unit 600, that is, in the first direction. The partition walls 640 may allow a part of the substances discharged through a vent 34 to flow.

The partition walls 640 according to an embodiment may include a first partition wall 641 and a second partition wall 642.

The first partition wall 641 may be connected to the first plate 610 and the second plate 620 and may not be in contact with the third plate 630. Thus, a part of the substances discharged through the vent 34 may flow through the flow path 600a formed between the first partition wall 641 and the third plate 630.

The second partition wall 642 may be disposed spaced apart from the first partition wall 641. The second partition wall 642 may be connected to the first plate 610 and the third plate 630 and may not be in contact with the second plate 620. Thus, a part of the substances discharged through the vent 34 may flow through the flow path 600a formed between the second partition wall 642 and the second plate 620.

The first partition wall 641 and the second partition wall 642 may be disposed alternately along the flow path 600a. In further detail, the first partition wall 641 and the second partition wall 642 may be disposed alternately in the longitudinal direction of the guide unit 600, that is, in the first direction. The vent 34 may be disposed between the first partition wall 641 and the second partition wall 642.

The partition walls 640 may function as traps that may confine substances, such as high-temperature gas and debris, discharged through the vent 34 if the battery cell 200 experiences thermal runaway between the first partition wall 641 and the second partition wall 642.

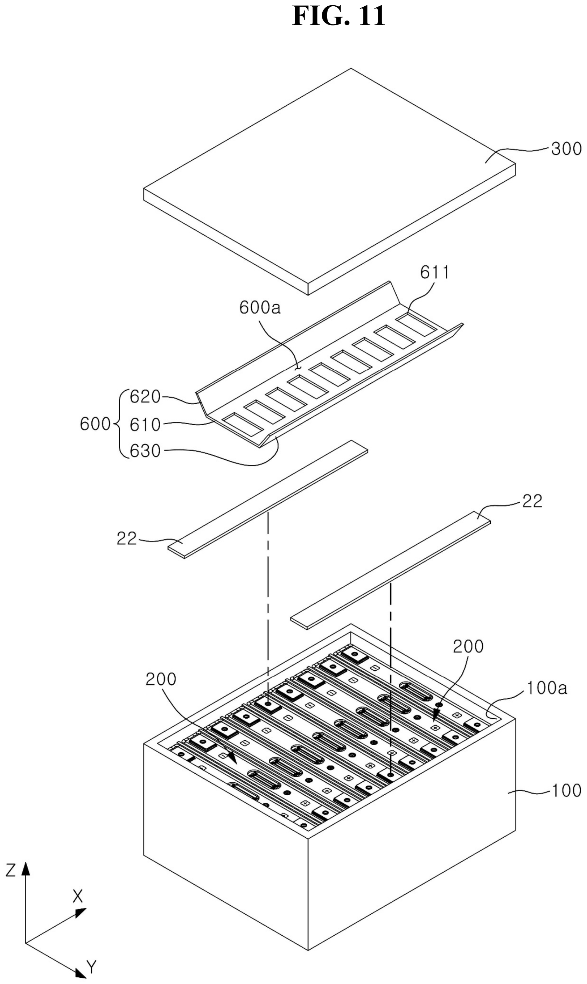

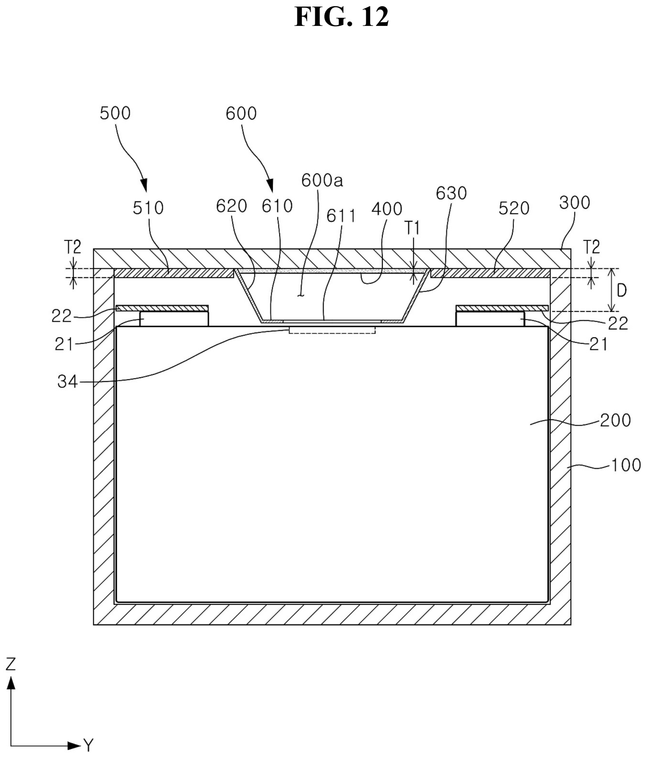

FIG. 11 is an exploded perspective view schematically showing a battery pack according to another embodiment of the present invention; and FIG. 12 is a cross-sectional view schematically showing the battery pack of FIG. 11.

Referring to FIGS. 11 and 12, the battery pack according to another embodiment of the present invention may include a housing 100, a battery cell 200, a cover 300, a heat-resistant layer 400, an insulating member 500, and a guide unit 600.

In describing the battery pack according to the present embodiment of the present invention, an embodiment of the guide unit 600 that was not described in the battery pack FIG. 6 or the battery pack of FIG. 9 will be described.

For a remaining configuration of the battery pack according to the present embodiment of the present invention, the description of the battery pack of FIG. 1, the battery pack of FIG. 6, or the battery pack of FIG. 9 may be applied.

The guide unit 600 according to the present embodiment may include a first plate 610, a second plate 620, and a third plate 630.

The first plate 610 may be formed to have a generally flat plate shape. The first plate 610 may be seated on the battery cell 200 or may be spaced apart from the battery cell 200. The first plate 610 may be disposed spaced apart from the cover 300 in the third direction. The first plate 610 may be disposed to face the heat-resistant layer 400.

An inlet 611 may be provided in the first plate 610. The inlet 611 may be formed to pass through the first plate 610 in the third direction. The inlet 611 may allow the inflow of discharged substances into a flow path 600a. In further detail, the inlet 611 may be disposed to face a vent 34 such that the substances discharged through the vent 34 flow into the flow path 600a through the inlet 611.

The second plate 620 and the third plate 630 may be disposed spaced apart from each other in the second direction. The first plate 610 may be disposed between the second plate 620 and the third plate 630. That is, the second plate 620 and the third plate 630 may be disposed at both, or opposite, sides of the first plate 610, respectively.

The second plate 620 may be formed to have a generally flat plate shape. The second plate 620 may obliquely extend from the first plate 610 at a certain angle (e.g., a set angle) and may be connected to the cover 300.

The second plate 620 may obliquely extend from a first side of the first plate 610 at the certain angle in the third direction and may be connected to the cover 300. An end portion of the second plate 620 may be fixed to a lower surface of the cover 300. An internal angle of the first plate 610 and the second plate 620 may form an obtuse angle.

The second plate 620 may be disposed between a cell terminal 21 facing a first insulating member 510 and the first plate 610, and the end portion fixed to the cover 300 may be disposed between the first insulating member 510 and the heat-resistant layer 400.

The third plate 630 may be formed to have a generally flat plate shape. The third plate 630 may obliquely extend from the first plate 610 at a set angle and may be connected to the cover 300.

The third plate 630 may obliquely extend from a second side of the first plate 610 at the certain angle in the third direction and may be connected to the cover 300. An end portion of the third plate 630 may be fixed to the lower surface of the cover 300. An internal angle of the first plate 610 and the third plate 630 may form an obtuse angle.

The third plate 630 may be disposed between a cell terminal 21 facing a second insulating member 520 and the first plate 610, and the end portion fixed to the cover 300 may be disposed between the heat-resistant layer 400 and the second insulating member 520.

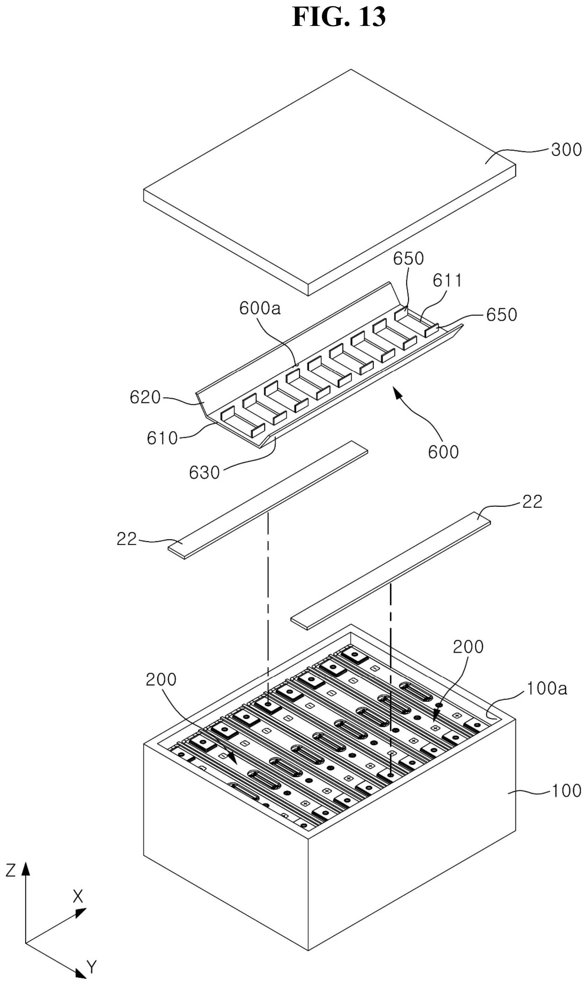

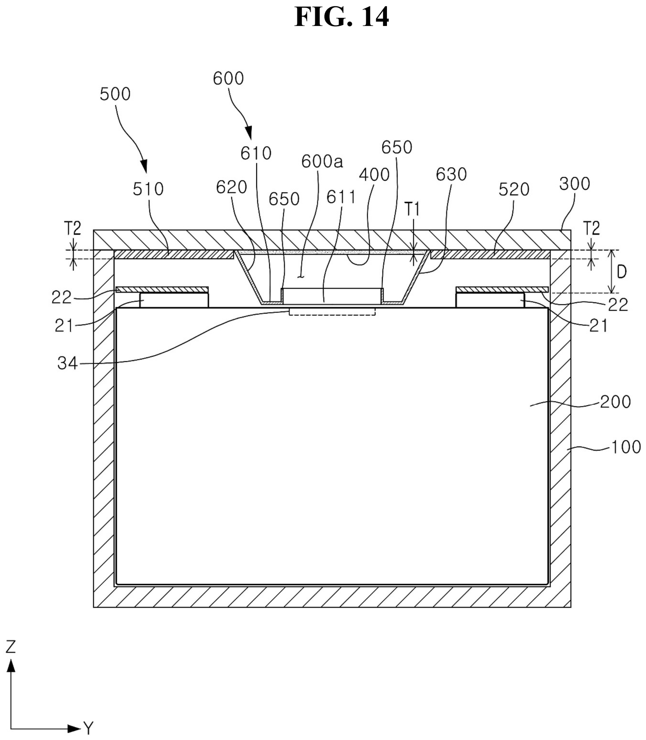

FIG. 13 is an exploded perspective view schematically showing a battery pack according to another embodiment of the present invention; and FIG. 14 is a cross-sectional view schematically showing the battery pack of FIG. 13.

Referring to FIGS. 13 and 14, the battery pack according to another embodiment of the present invention may include a housing 100, a battery cell 200, a cover 300, a heat-resistant layer 400, an insulating member 500, and a guide unit 600.

In describing the battery pack according to the present embodiment of the present invention, embodiments of the guide unit 600 that were not described in the battery pack of FIG. 6, the battery pack of FIG. 9, or the battery pack of FIG. 11 will be described.

For a remaining configuration of the battery pack according to the present embodiment of the present invention, the description of the battery pack of FIG. 1, the battery pack of FIG. 6, the battery pack of FIG. 9, or the battery pack of FIG. 11 may be applied.

The guide unit 600 according to the present embodiment may include a first plate 610, a second plate 620, a third plate 630, and a blocking plate 650.

The first plate 610 may be formed to have a generally flat plate shape. The first plate 610 may be seated on the battery cell 200 and may be disposed spaced apart from the cover 300 in the third direction. The first plate 610 may be disposed to face the heat-resistant layer 400.

An inlet 611 may be provided in the first plate 610. The inlet 611 may be formed to pass through the first plate 610 in the third direction. The inlet 611 may allow the inflow of discharged substances into a flow path 600a. In further detail, the inlet 611 may be disposed to face a vent 34 such that the substances discharged through the vent 34 flow into the flow path 600a through the inlet 611.

The second plate 620 and the third plate 630 may be disposed spaced apart from each other in the second direction. The first plate 610 may be disposed between the second plate 620 and the third plate 630. That is, the second plate 620 and the third plate 630 may be disposed at both, or opposite, sides of the first plate 610, respectively.

The second plate 620 may be formed to have a generally flat plate shape. The second plate 620 may obliquely extend from the first plate 610 at a certain angle (e.g., a set angle) and may be connected to the cover 300.

The second plate 620 may obliquely extend from a first side of the first plate 610 at the certain angle in the third direction and may be connected to the cover 300. An end portion of the second plate 620 may be fixed to a lower surface of the cover 300. An internal angle of the first plate 610 and the second plate 620 may form an obtuse angle.

The second plate 620 may be disposed between a cell terminal 21 facing a first insulating member 510 and the first plate 610, and the end portion fixed to the cover 300 may be disposed between the first insulating member 510 and the heat-resistant layer 400.

The third plate 630 may be formed to have a generally flat plate shape. The third plate 630 may obliquely extend from the first plate 610 at a set angle and may be connected to the cover 300.

The third plate 630 may obliquely extend from the other side of the first plate 610 at the certain angle in the third direction and may be connected to the cover 300. An end portion of the third plate 630 may be fixed to the lower surface of the cover 300. An internal angle of the first plate 610 and the third plate 630 may form an obtuse angle.

The third plate 630 may be disposed between a cell terminal 21 facing a second insulating member 520 and the first plate 610, and the end portion fixed to the cover 300 may be disposed between the heat-resistant layer 400 and the second insulating member 520.

The blocking plate 650 may protrude from the first plate 610 and may be disposed at an edge of the inlet 611. The blocking plate 650 may extend from the first plate 610 to a certain length (e.g., a set length) in the third direction and may be spaced apart from the cover 300. That is, the blocking plate 650 may not be in contact with the heat-resistant layer 400.

The blocking plate 650 may be provided as a plurality of blocking plates 650. For example, a pair of blocking plates 650 may be disposed to face each other while being spaced apart in the second direction. That is, the blocking plates 650 may be disposed at both, or opposite, sides of the inlet 611.

The blocking plates 650 may block the inflow of discharged substances into the vent 34. In further detail, it is possible to block substances such as flames and debris discharged through the vent 34 if the battery cell 200 experiences thermal runaway from flowing into the inlet 611 again along inner inclined surfaces of the second plate 620 and the third plate 630. Therefore, the discharged substances may be prevented or substantially prevented from flowing into the vent 34 again through the inlet 611 to prevent or substantially prevent further damage to the battery cell 200.

According to one or more embodiments of the present invention, the heat resistance of a cover can be increased by configuring a heat-resistant layer provided on the cover and disposed to face a vent, and a space in which the substances discharged through the vent flow can be expanded by inducing the thermal deformation of the cover. Thus, a phenomenon in which the discharged substances stagnate in a space formed between a battery cell and the cover can be reduced, thereby preventing or substantially preventing heat transfer to neighboring battery cells if the battery cell experiences thermal runaway.

According to one or more embodiments of the present invention, heat transfer to neighboring battery cells can be prevented or substantially prevented by preventing or substantially preventing the discharged substances from stagnating between the battery cell and the cover through the configuration of a guide unit that guides the flow of substances discharged through the vent.

However, aspects and effects obtained through the present invention are not limited to the above-described aspects and effects, and other aspects and technical effects that are not mentioned will be clearly understood by those skilled in the art from the description of the invention.

Although the present disclosure has been described with reference to some embodiments shown in the drawings, these embodiments are provided as examples, and it will be understood by those skilled in the art that various modifications and equivalents are possible.

The present invention has been described with reference to some embodiments illustrated in the drawings, which are provided as examples, and those having ordinary skill in the art will understand that various modifications and equivalent other embodiments are possible.

## Claims

1. A battery pack comprising:
a housing;
a plurality of battery cells accommodated in the housing and each comprising a vent;
a cover coupled to the housing and spaced apart from the battery cells; and
a heat-resistant layer on the cover and facing the battery cells.

2. The battery pack as claimed in claim 1, further comprising an insulating member between the battery cells and the cover.

3. The battery pack as claimed in claim 2, wherein a thickness of the heat-resistant layer is thinner than a thickness of the insulating member.

4. The battery pack as claimed in claim 2 or 3, wherein the insulating member is spaced apart from the heat-resistant layer.

5. The battery pack as claimed in claim 2, 3 or 4, wherein the insulating member is on the cover and spaced apart from the battery cells.

6. The battery pack as claimed in any one of claims 2 to 5, wherein the insulating member comprises:
a first insulating member; and
a second insulating member spaced apart from the first insulating member.

7. The battery pack as claimed in claim 6, wherein the heat-resistant layer is between the first insulating member and the second insulating member.

8. The battery pack as claimed in any preceding claim, further comprising a guide between the cover and the vent, communicating with the vent, and having a flow path through which substances discharged through the vent can flow.

9. The battery pack as claimed in claim 8, wherein the guide comprises:
a first plate comprising an inlet to allow an inflow of the discharged substances into the flow path and spaced apart from the cover;
a second plate extending from the first plate and connected to the cover; and
a third plate extending from the first plate, connected to the cover, and spaced apart from the second plate.

10. The battery pack as claimed in claim 9, wherein at least one of the second plate and the third plate obliquely extends from the first plate at a certain angle.

11. The battery pack as claimed in claim 10, wherein the guide further comprises a plurality of partition walls spaced apart along the flow path and configured to allow a part of the discharged substances to flow.

12. The battery pack as claimed in claim 11, wherein the plurality of partition walls comprises:
a first partition wall; and
a second partition wall spaced apart from the first partition wall.

13. The battery pack as claimed in any one of claims 9 to 12, wherein the guide further comprises a blocking plate protruding from the first plate and located at an edge of the inlet to block the inflow of the discharged substances into the vent.

14. The battery pack as claimed in any preceding claim, wherein a separation distance between each of the battery cells and the cover is 8 mm to 30 mm.

15. The battery pack as claimed in any preceding claim, wherein a thickness of the heat-resistant layer is 20 µm to 30 µm.
